# EUROPÄISCHE PATENTSCHRIFT

(11) **EP 1 217 477 B1**
(45) Veröffentlichungstag und Bekanntmachung des Hinweises auf die Patenterteilung: **05.05.2010**
(21) Anmeldenummer: 01890308.8
(22) Anmeldetag: 07.11.2001
(51) Int. Cl.: G05B 19/042

(54) **Verfahren zur Parametrierung eines Prüfstandes bzw. Prüffeldes**
Process of parametrization of a test-stand or of a testing ground
Procédé pour la paramétrage d'un banc d'essai ou d'un champ d'essai

(30) Priorität: 13.12.2000 AT 9152000
(43) Veröffentlichungstag der Anmeldung: 26.06.2002
(73) Patentinhaber: AVL List GmbH, 8020 Graz (AT)
(72) Erfinder: Nonn, Harald, 69469 Weinheim (DE); Radke, Friedrich, Dr., 8051 Graz (AT); Rosenberger, Harald, Dr., 8160 Weiz (AT)
(74) Vertreter: Laminger, Norbert

(56) Entgegenhaltungen:
- US-A- 4 125 894
- US-A- 4 373 186
- US-A- 5 435 192
- US-A- 5 705 742
- US-A- 5 852 789
- US-A- 6 138 081

## Beschreibung

Die Erfindung betrifft ein Verfahren zur Parametrierung eines Prüfstandes bzw. Prüffeldes, bei welchem im zeitlichen, weg- und Lastspiel-geführten Prüfverlauf, abwechselnd Stufen, welche im Prinzip frei wählbare Untermengen aus der Gesamtheit der Sollwert- und Meßkanäle aktivieren, und bei welchen die momentan aktivierten Sollwerte, Parameter und Aktionen von Sensoren und/oder Regelvorrichtungen zur Kontrolle und Überwachung des Prüflaufes angezeigt und nach Bestätigung durch den Benutzer in Steuersignale an den Prüfstand bzw. das Prüffeld umgewandelt werden, sowie eine Prüfstandssteuereinrichtung, umfassend zumindest je eine Speichereinrichtung, eine Recheneinheit, eine Eingabeeinheit für Sollwerte, Parameter od. dgl. und eine optische Anzeigeeinrichtung zur Darstellung der Parameter, Einstellungen und Meßgrößen und Meßwerte, sowie Schnittstellen zu den Sensoren und Regelvorrichtungen des Prüfstandes, welche Bauteile zur gegenseitigen Übermittlung von Daten miteinander verbunden sind.

Die effiziente Gestaltung und Abwicklung des Prüfbetriebs hat in der Entwicklung von Motor, Getriebe und Antriebsstrang zentrale Bedeutung: Antriebssysteme werden immer komplexer, zunehmend mehr Meßtechnik wird eingesetzt und die Anzahl von Kalibrierparametern steigt rasant an. Gleichzeitig muß alles getan werden, um die Entwicklungszeiten zu verkürzen. Zur Bewältigung dieser zunehmend komplexer werdenden Herausforderungen ist mehr als eine leistungsstarke Prüfstands-Automatisierung notwendig. Vielmehr ist ein Management-System erforderlich, das aus einer ganzheitlichen Betrachtung aller Arbeitsabläufe im Entwicklungs- und Prüfbetrieb entsteht und diese gezielt optimiert. Dabei müssen alle vorhandenen und erwarteten Methoden und Meßverfahren/-systeme berücksichtigt werden, um Zukunftssicherheit zu erreichen. Nur so sind nachhaltige Produktivitätssteigerungen möglich.

Von besonderer Bedeutung bei der Definition und Parametrierung von Prüfläufen ist das Erstellen und Parametrieren von Sollwertprofilen: Der Prüfling soll in einer Vielzahl einzeln definierter Betriebspunkte (Stufen) jeweils eine bestimmte Zeit lang, für eine bestimmte Wegstrecke oder für eine bestimmte Anzahl an Umdrehungen, auf einen oder mehrere Sollwerte eingeregelt und geprüft werden, wobei gleichzeitig diverse Messungen und Auswertungen durchzuführen sind. In der Vergangenheit war es erforderlich, Prüfabläufe in einer Programmiersprache in Form sogenannter Scripts zu programmieren. Dabei mußte man dazu auf aufwendige Art viele einzelne Zahlen in Programmzeilen oder Tabellen eingeben, beispielsweise die jeweils typischerweise drei bis fünf aktiven Sollwertkanäle aus der Gesamtheit von ca. 15 bis 20 Sollwertkanälen. Das war eine dem Bedienpersonal der Prüfständen fremde und unangenehme Tätigkeit, entsprechend etwa die beispielsweise in internationalen Normen beschriebenen verschiedenen Möglichkeiten zur Programmierung von speicherprogammierbaren Steuerungen (SPS). Dabei ist es beispielsweise aus den oben genannten Normen auch bekannt, den prinzipiellen Ablauf von Prüfläufen in Form von Blockdiagrammen graphisch darzustellen. Diese sind aber reine Ablaufpläne, vollkommen getrennt vom realen System und ohne direkten Einfluß darauf. Es ist weiters von unterschiedlichsten Anwendungen bekannt, beliebige Befehlssequenzen einer Programmiersprache aus vordefinierten Komponenten und Mithilfe graphischer Werkzeuge, beispielsweise durch "Drag und Drop" am Bildschirm, zusammenzustellen.

In der US-A-5 435 192 ist ein Verfahren zur Parametrierung eines Prüfstandes geoffenbart, bei welchem Stufen des Prüfverlaufes definiert werden, welche im Prinzip frei wählbare Untermengen aus der Gesamtheit der Sollwert- und Messkanäle aktivieren, und bei welchen die momentan aktivierten Sollwerte, Parameter und Aktionen von Sensoren und Regelvorrichtungen zur Kontrolle und Überwachung des Prüflauches angazeigt und nach Bestätigung durch den Benutzer in Steuersignale an den Prüfstand umgewandelt werden. Dabei werden unmittelbar aufeinander folgende Stufen zu einer Stufensequenz zusammengefasst. Auf einer Ebene der Parametrierungsverfahrens werden Anzeigesteuersignale für die Darstellung jeder Stufensequenz separat und in Tabellenform erzaugt.

In der US-A-S 790 437 wird ein Verfahren zur Programmierung eines Heizungsreglers mit rampenförmiger Sollwertfolge beschrieben. Die Sollwertfolge wird dabei graphish dargestellt und enthält an vorgebbaren Stellen Temparatur-Sollwertpunkte, deren Lage über eine separate graphische Benutzeroberfläche verändert werden kann. Ereignisse können ausschlieβlich an den bereits definierten Temperaturpunkten programmiert werden.

Aufgabe der Erfindung war es, für Prüfsysteme und Prüfläufe, insbesondere in der Forschung und Entwicklung von Verbrennungskraftmaschinen, Getrieben und ganzen Fahrzeug-Antriebstrangsystemen die genaue Definition der realen Prüfaufgabe und insbesondere die aufwendige Parametrierung von Sollwertverläufen intuitiv mittels graphischer Werkzeuge und mit geringem Arbeitsaufwand, rasch und mit geringer Fehlerwahrscheinlichkeit zu ermöglichen.

Diese Aufgabe wird erfindungsgemäß mit einem Verfahren gemäß Anspruch 1 gelöst.

Das erfindungsgemäße System bietet nun die Möglichkeit der graphischen Definition von Stufensequenzen (SSQ). Dabei werden dem Anwender am Bildschirm zwei oder mehr Darstellungsebenen geboten, die miteinander verkoppelt sind. Jede Änderung eines Parameters in einer der Ebenen wird sofort auch in den anderen Ebenen entsprechend deutlich gemacht. Kernstück ist ein frei gestaltbarer Funktionsblock für eine Stufen-Sequenz (SSQ), die mit 3 verkoppelten Darstellungsebenen (Tabelle, Sollwertverläufe, Aktionsspuren) graphisch dargestellt wird und in einen graphisch als Block-Sequenz (BSQ) dargestellten Prüflauf mit sogar konkurrierenden Parallelstrukturen eingebaut werden kann. Die Funktionsblöcke werden graphisch dargestellt und können speziell vom Anwender generiert sein und zusammen mit Standardkomponenten in einer offenen Bibliothek verwaltet werden.

Neben der beschriebenen Stufensequenz gibt es weitere Arten von Funktionsblöcken, die vom Anwender definiert und eingebracht werden können. Dazu zählen einerseits die applikationsunabhängigen Komponenten, wie beispielsweise die logische Schleifensteuerung, die Meldung bestimmter Ereignisse an den Benutzer, Befehle an die Meßeinheiten, usw., und andererseits die applikationsbezogenen Komponenten, wie beispielsweise vordefinierte stationäre Prüfläufe, Standard-Prüfläufe für die Abgasmessung, etc. Von besonderem Vorteil ist, daß diese Prüfläufe auch auszugsweise, d.h. nur zu einem Teil bzw. in einzelnen oder mehreren Stufen oder Bereichen, ausgeführt oder in einen weiteren Prüflauf eingebaut werden können. Außerdem können als applikationsbezogene Komponenten auch Formelblöcke und Lay-Outs für z.B. die Auswertung und Darstellung der Prüfdaten definiert und in die Blocksequenz eingebaut werden. Auf diese Art kann auch der Aufwand des Post-Processing wesentlich verringert werden.

Gemäß einem weiteren Merkmal der Erfindung kann vorgesehen sein, dass jeweils zumindest einer der dargestellten Parameter und/oder Werte jeder unterschiedlichen Darstellungsform jeder Stufensequenz mittels Eingabesignalen von separaten Steuereingängen veränderbar ist, wobei jede Veränderung eines Anzeigesteuersignales ermittelt, entsprechend veränderte Anzeigesteuersignale für alle anderen Darstellungsformen erzeugt und die neuen Werte und zur Übertragung auf den Prüfstand bzw. das Prüffeld bereitgestellt werden. Änderungen können also wahlweise und einander ergänzend durch Eingeben von Zahlen in die Tabelle, durch Anklicken und Ziehen einer Verlaufslinie im Diagramm, oder durch Editieren in den zugehörigen Aktionsspuren ren in den zugehörigen Aktionsspuren durchgeführt werden. Die Erstellung eines Prüflaufs wird hauptsächlich off-line erfolgen, also vor der Durchführung des Prüflaufs. Während des Prüflaufs wird aber die selbe graphische Bedienoberfläche zur Anzeige der aktuellen Informationen genutzt, wobei die aktuelle zeitliche Position, zusammen mit den Ergebnissen von Messungen und Prüflingsbefehlen, sowie Verletzungen von Grenzwerten und Toleranzen, im Prüflauf eingeblendet werden. Darüberhinaus ist es auch möglich, während eines Prüflaufs die Parameter und sogar die Struktur des Prüflaufs zu verändern, also beispielsweise in einer Stufensequenz weitere Schritte einzufügen, zu parametrieren und Parallelaktionen zu definieren.

Vorteilhafterweise können dabei noch die Eingabesignale für die Sollwerttypen überprüft und bei Feststellung eines bestimmten Sollwerttyps oder einer bestimmten Kombination von Sollwerttypen eine spezifische, diese Sollwerttypen enthaltende Befehlssequenz aufgerufen, entsprechende Anzeigesteuersignale erzeugt werden und zur Übertragung auf den Prüfstand bzw. das Prüffeld bereitgestellt werden. So sind die Stufensequenzen je nach den darin vorgesehenen Sollwerten, Meßkanälen usw. in bestimmte, immer wiederkehrende Klassen einteilbar, wobei durch die Abfrage der Eingangssignale und der dadurch repräsentierten Sollwerte noch fehlende Werte vor deren vollständiger Eingabe durch den Benutzer erkannt werden können.

Gemäß einem weiteren Merkmal der Erfindung werden auf einer übergeordneten Ebene des Parametrierungsverfahrens Stufensequenzen in Blöcken zusammengefaßt und jeweils einen Block repräsentierende Eingabesignale abgefragt und werden bei Auswahl eines bestimmten Blockes diesen Block repräsentierende Anzeigesteuersignale für eine weitere, separate Darstellungsform erzeugt sowie die im Block repräsentierten Werte zur Übertragung auf den Prüfstand bzw. das Prüffeld bereitgestellt werden. Diese intuitive graphische Definition und Parametrierung von Prüfläufen in Form von Blocksequenzen (BSQ) aus einerseits bereits erprobten Prüflaufkomponenten und andererseits anwendungsspezifisch erstellten zusätzlichen Komponenten erfordert keine spezifischen Programmierkenntnisse. Die Prüflaufkomponenten stehen in einer vom Anwender erweiterbaren Bibliothek zur Verfügung. Durch die Wiederverwendung der bereits getesteten Durch die Wiederverwendung der bereits getesteten Bibliothekskomponenten wird die Effizienz bei der Erstellung neuer Prüfabläufe erhöht und die Fehlermöglichkeit reduziert. Auch alle anderen Arten von Funktionsblöcken können vordefiniert in der Bibliothek vorhanden sein.

Gelöst wird die gestellte Aufgabe auch durch eine Prüfstandssteuereinrichtung gemäß Anqspruch 5

Vorteilhafterweise sind dabei in der Speichereinrichtung zumindest die Parameter, Einstellungen und Meßgrößen in Form von vordefinierten, zeitlich nacheinander abzuarbeitenden Stufensequenzen abgelegt, und ist ein Steuerprogramm vorgesehen, vorzugsweise in der Speichereinheit abgelegt, das die Anzeigeeinrichtung zum Abruf von jeweils zumindest einer Stufensequenz ansteuert.

Die Effizienz bei der Erstellung neuer Prüfabläufe und die Reduktion der Fehlermöglichkeiten dabei können verbessert werden, wenn die Speichereinrichtung eine Bibliothek von vordefinierten Blöcken aus jeweils zumindest einer Stufensequenz, vorzugsweise von mehreren zusammengefaßten Stufensequenzen, von Sollwerten und allenfalls Aktionen enthält.

Um eine direkte Übertragung des erstellten Prüflaufes bzw. auch die Anpassung bzw. sogar Erstellung in Echtzeit und/oder direkt am Prüfstand zu ermöglichen, kann eine Schnittstelle zu Datenübertragungseinrichtungen am Prüfstand oder Prüffeld für die Prüfstandssteuereinrichtung vorgesehen sein. Die Erstellung eines Prüflaufs wird zwar hauptsächlich off-line erfolgen, also vor der Durchführung des Prüflaufs. Während des Prüflaufs wird aber die selbe graphische Bedienoberfläche zur Anzeige der aktuellen Informationen genutzt, wobei die aktuelle zeitliche Position, zusammen mit den Ergebnissen von Messungen und Prüflingsbefehlen, sowie Verletzungen von Grenzwerten und Toleranzen, im Prüflauf eingeblendet werden. Darüberhinaus ist es auch möglich, während eines Prüflaufs die Parameter und sogar die Struktur des Prüflaufs zu verändern, also beispielsweise in einer Stufensequenz weitere Schritte einzufügen, zu parametrieren und Parallelaktionen zu definieren.

Die in die Aktionsspur unter anderem durch Ziehen mit der Maus ("Drag & Drop") einbringbaren Komponenten sind die in der Bibliothek enthaltenen vorgegebenen oder speziell neu eingebrachten Funktionsblöcke. Beispielsweise können auf diese Art zu bestimmten Zeitpunkten innerhalb einer Stufe oder/und Stufenfolge die erforderlichen Messungen gestartet, Grenzwerte und Toleranzen definiert werden oder/und Befehle an den Prüfling ausgegeben werden. Dabei enthält jede Aktionsspur nur bestimmte Typen von Funktionsblöcken, weshalb mehrere Aktionsspuren für jeweils unterschiedliche Funktionsblöcke vorgesehen sind. Die Aktionsspuren werden parallel, aber synchronisiert zum Sollwertprofil, abgearbeitet. Aktionsspuren können zudem selektiv aktiviert werden, damit z.B. unterschiedliche Messprogramme für das gleiche Sollwertprofil definiert werden können.

In der nachfolgenden Beschreibung soll die Erfindung anhand eines Ausführungsbeispiels und unter Bezugnahme auf die beigefügte Zeichnung näher erläutert werden, welche eine beispielhafte Anzeige einer Stufensequenz in der erfindungsgemäßen gekoppelten Darstellung zeigt.

Bei der Erstellung und Parametrierung eines Prüflaufes auf dem Gebiet der Kraftfahrzeug-Entwicklung, für etwa einen Verbrennungsmotor, einen Antriebsstrang etc., könnte gemäß einem Beispiel und unter vorteilhafter Anwendung des erfindungsgemäßen Verfahrens bzw. der erfindungsgemäßen Prüfstandssteuereinrichtung ein Fahrprofil in der nachfolgend beschriebenen Art und Weise erstellt werden. Der wesentliche Bestandteil von Fahrprofilen sind Sollwertprofile, die ereignis-, weg- oder zeitgesteuert abgearbeitet werden. Synchron zu diesen Sollwertprofilen können Aktionen gesetzt werden, um Befehle abzusenden und um Parameter einzustellen. Der zweite Bestandteil von Fahrprofilen ist die Beschreibung der zu bewältigenden Strecke. Zu diesem Zweck erlauben zusätzliche oder mit der Parametrisierung der Sollwertprofile verbundene Fahrprofileditoren die Erstellung von Streckenprofilen, wobei es leicht ist, die Synchronisierung zwischen Streckenprofil und Sollwertprofil festzulegen.

Im Off-Line-Betrieb können Fahr- und Streckenprofile erstellt und modifiziert werden.
Diese Funktionen sind für alle gespeicherten und aktiven Profile möglich. Für diesen Mode ist kein laufender Prüfstand erforderlich. Der über die graphische Benützeroberfläche zugängliche Editor, der über herkömmliche Eingabeeinrichtungen (Tastatur, Maus, Touchscreen, Touchpad, etc.) gesteuert wird, zeigt lediglich an, ob ein Wechsel in den On-Line-Betrieb möglich ist. Die jeweils aktuellen Werte werden auf einer Anzeigeeinrichtung, vorzugsweise zumindest einem Bildschirm, ausgegeben.

Neben der Eingabe und Parametrierung im Off-Line-Betrieb kann auch die Verfolgung des Prüflaufes im On-Line-Betrieb erfolgen, vorteilhafterweise sogar interaktiv, d.h. mit der Möglichkeit der Anpassung bzw. Adaptierung der Sollwertstufen, Aktionen, etc. in Echtzeit. Im On-line-Betrieb kann verfolgt werden, wie das Fahrprofile abgearbeitet wird. Dabei werden die den Sollwerten zugeordneten Istwerte angezeigt, sowie Verletzungen von Qualitätsmerkmalen. Im On-Line-Betrieb kann der Bediener die Abarbeitung von Fahrprofilen am Prüfstand verfolgen. Es werden Soll- und Istwerte dargestellt. Sind Qualitätskriterien definiert worden, wird deren Verletzung oder Einhaltung aufgezeigt. Eine Darstellung der Fahrstrecke und wo sich das Fahrzeug aktuell darauf befindet, steht ebenfalls zur Verfügung.

In diesem Mode können auch Kommandos gegeben werden, mit denen die Bearbeitung des Fahrprofils beeinflußt werden kann. So kann die Bearbeitung gestoppt, zurückgesetzt, angehalten und fortgesetzt werden. Sind Wiederholungsschleifen definiert, kann abgelesen werden in der wievielten Wiederholung man sich aktuelle befindet. Außerdem werden allgemeine Daten, wie Startzeitpunkt, bisherige Dauer des Fahrprofils, falls möglich die erwartete Dauer, etc. berechnet und angezeigt. Wird der Editor in diesem Mode betrieben, aktiviert er sich automatisch, wenn mit der Bearbeitung eines Fahrprofils begonnen wird. In diesem Mode können alle die Änderungen on-line vorgenommen werden, die ohne Einfügen von Stufen und Hinzufügen von Aktionen auskommen. Dazu braucht auch die Bearbeitung des Fahrprofils nicht angehalten werden. Für Änderungen, die ein Anhalten des Fahrprofils erforderlich machen, muß in den Off-Line-Betrieb gewechselt werden. Diese Änderungen werden erst nach einem Zurücksetzen der aktuellen Bearbeitung aktiv.

In allen Fällen erlaubt eine grafische Oberfläche die Erstellung und Nachbearbeitung aller Art von Verläufen, auch von berechneten Verläufen, wie z.B. dem vorausschauenden Fahrer. Qualitätsmerkmale können ebenfalls über die vorhandenen Eingabeeinrichtungen eingegeben und grafisch, z.B. als zulässiges Sollwertband, dargestellt werden.

In weiterer Folge werden die Begriffe entsprechend den nachstehenden Definitionen verwendet:

| **Begriff** | **Abkürz.** | **Definition** |
|---|---|---|
| Sollwert | | Sollwert in der Form Relativzeit und Wert, d.h. Sollwert ist innerhalb der Zeit einzustellen, z.B. (3s, 85) Sollwert soll in 3 s auf 85 gehen. |
| Sollwertspur | | Zeitlicher Kurvenverlauf eines Sollwertes = n Sollwerte. |
| Sollwertstufe | | n-Sollwerte mit gleicher Rampenzeit,. |
| Sollwertprofil | | Kombination von mehreren Sollwertstufen mit einer gemeinsamen Zeitbasis, d.h. sie werden synchron abgearbeitet. z.B.: (3s, 85, 3) (2s, 90, 0) Erster Sollwert läuft vom momentanen Wert in 3 Sekunden auf 85 und zweiter Sollwert auf 3. Dann geht erster Sollwert in 2 Sekunden auf 90 und zweiter Sollwert auf 0. |
| Aktion | | Befehle, wie z.B. Motorstart, Einstellungen, wie z.B. Straßenoberfläche, oder Triggerbedingungen, wie z.B. Motordrehzahl > 5000, die bei bestimmten Stellen im Sollwertprofil vorgenommen werden sollen. |
| Fahrprofil | | Kombination von Sollwertprofilen, Streckenprofil und Aktionen |
| Sollwertbeschreibung | | Allgemeine Daten zu einem Sollwert, wie Bezeichnung, Wertebereich, Darstellungsbereich, Einheit, etc. |
| Stufennummer | | Identifizierung von Positionen innerhalb eines Profiles. Der erste Sollwert hat die Nummer 1 |
| Betriebsart | | Die Betriebsart legt fest wie die Eintriebsmaschine, in der Regel Verbrennungsmotor, und Belastungsmaschinen geregelt werden. Durch sie ist festgelegt, welche Sollwerte eingeregelt werden können. |
| Streckenprofil | | Beschreibung einer Fahrstrecke. Es werden zwei Arten von Streckenprofilen unterschieden, der Rundkurs und die Verbindungsstrecke zwischen zwei Punkten A und B. Das Streckenprofil beschreibt Steigung, Kurvenradius und Beschaffung der Straßenoberfläche einer Fahrstrecke. |

Sollwertprofile sind also n-dimensionale Matrizen; die erste Spalte enthält die Rampenzeit und die restlichen Spalten enthalten die Sollwerte. Die Zeilen von Sollwertprofilen werden Sollwertstufen genannt, d.h. eine Sollwertstufe ist ein n-dimensonaler Vektor. Ein Profil kann mehrere Sollspalten enthalten, jedoch sind nicht alle Sollwerte in jeder Stufe definiert, diese werden auf "nicht definiert" gesetzt.

Beispiel für ein Sollwertprofil mit drei Sollwerten als Spalten hinter einer ersten Spalte mit Definition der Rampenzeit und vier Sollwertstufen als Zeilen zeigt die folgende Tabelle:

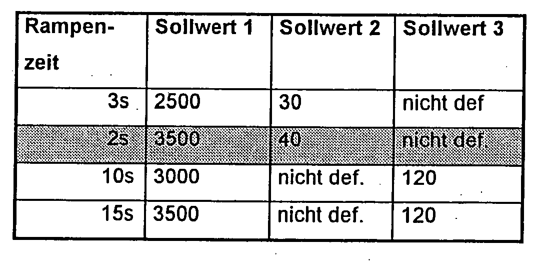

Auf solche Sollwertprofile können Operationen ausgeführt werden, von welchen beispielsweise eine im Dehnen/Verkürzen einer Stufe bzw. von deren Rampenzeit besteht und somit auch die Gesamtzeit eines Profils verändert. Es kann der Sollwert einer Spur verändert werden, wobei die Rampenzeit unverändert bleibt, oder es kann ein Ändern mit DehnenNerkürzen kombiniert und dabei sowohl Sollwert wie Rampenzeit verändert werden. Die Rampenzeit ändert sich natürlich für alle Spuren an dieser Stelle.

Eine weitere Operation ist beispielsweise das Anlegen einer neuen Stufe, wobei die Gesamtzeit unverändert bleibt. Die Werte der anderen Spuren werden so berechnet, daß deren Verlauf zuerst unverändert bleibt. Diese können dann nach Abschluß dieser Operation durch "Ändern" neu eingestellt werden. Das Anlegen einer neuen Stufe verlängert die Gesamtzeit um die neue Stufenzeit. Beim reinen Löschen bleibt die Gesamtzeit unverändert, d.h. die Rampenzeit der nachfolgenden Stufe wird entsprechend vergrößert. Wird diese Operation auf die letzte Stufe ausgeführt, bleibt die Stufe erhalten, es werden lediglich die Sollwerte auf die Werte der vorhergehenden Stufe gesetzt. Durch ein Löschen und Verkürzen wird die entsprechende Stufe gelöscht, und die Gesamtzeit verkürzt sich entsprechend.

Selbstverständlich kann ein Profil zu einem anderen Profil ab einer markierten Stelle hinzugefügt werden. Hierbei bleibt die Zeitspalte des ersten Profils konstant. Da die Zeitspalten unterschiedlich sein können, werden die Werte der addierten Sollwertspalten so berechnet, daß die Werte die ursprünglichen Spuren so gut wie möglich abgebildet werden. Enthält das zu addierende Profil gleiche Sollwerte wie das ursprüngliche Profil, so werden diese Sollwerte ersetzt. Auch ein Mischen ist möglich, wobei im Fall, dass die Zeitspalten unterschiedlich sind, diese neu berechnet und gegebenenfalls Stufen eingefügt werden, so daß die Sollwerte der beiden Profile durch das neue Profil exakt nachgebildet werden. Nur wenn das erste Profil noch leer ist, wird in den beiden letzteren Fällen die Zeitspur des zweiten Profils übernommen.

Ein Profil kann aber auch in einem anderen Profil an markierter Stelle eingefügt werden, wobei hier - wie auch in den beiden unmittelbar vorhergehend beschriebenen Fällen - diese Operationen auf alle Spuren oder nur auf ausgewählte Spuren ausgeführt werden können.

Aktionen sind Funktionen die ereignisgesteuert aufgerufen werden und den Sollwertstufen zugeordnet sind. Die möglichen Aktionen können in drei Gruppen eingeteilt werden.

Eine Gruppe sind Befehle und Einstellungen, wobei Befehle an andere Funktionen des Leitsystems gesendet werden können und über Einstellungen das Verhalten von Funktionen durch Änderung von Parametern beeinflußt werden kann. Beispiele dafür sind: Schaltkommandos, Rekorder starten, Qualitätsüberwachung starten, Fahrzeuggewicht verändern, Schaltgeschwindigkeit verändern, Fahrermodell auswählen, Qualitätskriterien einstellen, usw.

Über die zweite Gruppe der Trigger kann der zeitliche Ablauf des Fahrprofils beeinflußt werden. In der Regel werden die Stufen aufgrund der Zeitspalte abgearbeitet, ist jedoch ein Trigger gesetzt, wird die Abarbeitung solange angehalten, bis die Triggerbedingung erfüllt. Mögliche Trigger sind etwa: Weg ist erreicht, Motordrehzahl überschreitet Grenzwert, etc.

Verzweigungen stellen die dritte Gruppe dar, über welche die Reihenfolge in der die Sollwertstufen abgearbeitet werden beeinflußt werden kann. Beispiele sind: N Wiederholungen eines Profilausschnitts, Überspringen eines Profilausschnitts wenn eine Bedingung nicht erfüllt ist, usw.

Der Aufruf von Aktionen erfolgt ereignisgesteuert. Bei der Bearbeitung einer Stufe treten die folgenden Ereignisse ein:
Aktivierung - Die Bearbeitung der Stufe beginnt. Hier werden standardmäßig Verzweigungen und Einstellungen bearbeitet.
Betriebsart wird eingestellt - Ist die für die Stufe erforderliche Betriebsart bereits eingestellt, ist dieser Zeitabschnitt nicht vorhanden. D.h. hier können Aktionen aufgerufen werden, die bei Betriebsartenwechsel ausgeführt werden sollen.
Betriebsart ist eingestellt - Mit diesem Ereignis werden zuerst die Sollwerte eingestellt und anschließend die zugeordneten Funktionen aktiviert. Standardmäßig werden hier Befehle und Trigger bearbeitet.
Deaktivierung - Die aktuelle Stufe ist abgeschlossen. Hier werden wiederum standardmäßig Verzweigungen und Einstellungen abgearbeitet, d.h. evtl. die ursprünglichen Einstellungen wieder hergestellt.

Jedem der obigen Ereignisse können Aktionen zugeordnet werden. Da Wiederholungen möglich sind, können die Aktionen auch nur bei bestimmten Wiederholungen, z.B. nur beim erstenmal, bei jeder 10ten Wiederholung, etc. ausgeführt werden. Jede Aktion wird in der graphischen Darstellung über ein spezifisches Icon visualisiert.

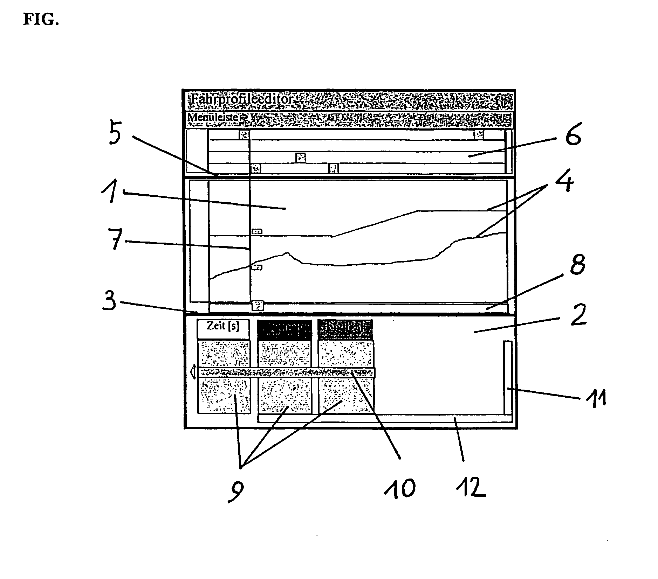

Fahrprofile werden graphisch dargestellt und kontrolliert über das Fenster "Fahrprofile erstellen" mittels der vorhandenen Eingabeeinrichtungen eingegeben und verändert. Die Anzeige gliedert sich zumindest in zwei, durch gekoppelte Steueralgorithmen angesteuerte Hauptbereiche, wobei beispielsweise im oberen Bereich die Sollwertspuren graphisch dargestellt und im unteren Bereich die Sollwerte tabellarisch (Zeit und Wert) dargestellt werden, wie dies in Fig. 1 gezeigt ist.

Die Fensteraufteilung zwischen grafischem Bereich 1 und tabellarischem Bereich 2 ist durch eine Trennlinie 3 gekennzeichnet und ebenfalls über eine Eingabeeinrichtung, etwa eine Maus, einstellbar (Ziehen der Teilungsmarkierung 3).

Im grafischen Bereich 1 werden die Sollwertspuren als Kurvenverläufe 4 über der Zeit (x-Achse) dargestellt. Prinzipiell sind aber auch mehrdimensionale Zusammenhänge darstellbar, etwa durch Einbeziehung mehrerer Koordinatenachsen, durch eine Wasserfall- oder Isolinien-Darstellung, räumliche Darstellung od. dgl.

Oberhalb des Bereiches 1 für die Sollwertspuren 4 in Diagrammform kann über einen weiteren Teilungsbalken 5 ein optionales Aktionsfenster 6 geöffnet werden. Die unterschiedlichen Sollwertspuren werden farblich unterschieden. Die Skalierung der y-Achse wird standardmäßig aus der Sollwertbeschreibung genommen, sie kann jedoch auch modifiziert werden. Die Skalierung wird am rechten Rand vorgenommen. Hier können zwei oder mehrere Skaleneinteilungen dargestellt werden. Die Skalierung der gerade ausgewählten Spur erscheint oben, und diejenige der vorher ausgewählten Spur wird nach unten geschoben.

Die Sollwertspuren 4 werden als Linienzug mit linearer Verbindung der Punkte dargestellt. Die Punkte sind durch Kreuze markiert. Die ausgewählte Spur wird hervorgehoben.

Die aktuelle Position wird durch einen senkrechten Strich, den Positionsstrich 7, gekennzeichnet. Neben dem Positionsstrich 7 erscheinen Wertfenster, die die Daten der aktuellen Sollwertstufe beinhalten. Die Wertfenster der einzelnen Sollwerte werden dort dargestellt, wo der Positionsstrich 7 die Sollwertkurven 4 schneidet. Am unteren Ende des Positionsstriches in Bereich der Zeitachse, erscheint ein Wertfenster das Stufennummer und Rampenzeit enthält.

Kann der Gesamtverlauf nicht mehr im grafischen Bereich dargestellt werden, erscheint unten ein Scroll-Bar 8, mit dem das Fenster über die Spuren bewegt werden kann.

Zur besseren Orientierung kann ein Raster aktiviert werden, über Menüleiste - Ansicht - Stufenraster. Das Raster markiert jede 10 Stufe mit einem senkrechten Haarstrich und jede 50 und 100 Stufe mit etwas dickeren Strichen.

Im Aktionsfenster 6 werden die Aktionen dargestellt. Es ist zeilenorientiert. Jede Akionsart wird auf einer eigenen Zeile dargestellt, beispielsweise Ablaufsteuerung mit Schleifen und If-Bedingungen, Qualitätskriterien mit Darstellung der Qualitätsüberwachungen, Regressionsanalyse od. dgl., aber auch Messungen, wie etwa Recorder Start/Stop, Messung starten, usw.

Weitere Aktionszeilen können vorgesehen sein für Kommandos und Einstellungen, etwa allgemeines Kommando, Parametereinstellung, Bitouts, usw., für Charakterisierung des Fahrers, seinen Motorstart, Fahrerverhalten, die Schaltkommandos, etc., aber auch für Trigger (Wegtrigger, Grenzwerttrigger, Ereignistrigger) oder Betriebsart (hier erscheinen als Icons die Betriebsartensymbole vom Bedienfeldes).

Auf diesen Zeilen werden die Icons der Aktionen oberhalb der Sollwertpunkte, denen sie zugeordnet werden gezeigt. Der Positionsstrich 7 ragt auch in das Aktionsfenster 6 hinein. Wird der Positionsstrich 7 auf einen Sollwertpunkt gestellt, gibt die Ausrichtung der Icons zum Positionsstrich an, zu welchen Stufenereignissen die Aktionen ausgeführt werden sollen. So kann eine Anordnung links die Aktivierung (Betriebsart wird eingestellt) symbolisieren, die mittige Darstellung bedeutet, dass die Betriebsart eingestellt ist, und die Anordnung rechts steht für die Deaktivierung.

Haben Aktionen einen Gültigkeitsbereich, wie z.B. Wiederholungsangaben, schließt sich an die Aktion ein kleiner Strich, die Geltungsmarkierung, an, diese markiert für welche Stufen die Aktion gilt. Auch ineinander geschachtelte Schleifen sind möglich.

Über den Menüpunkt Ansicht kann eingestellt werden, welche Zeilen des Aktionsfensters dargestellt werden sollen.

Für einen Sollwert können mehrere Aktionen der gleichen Art definiert werden. Dieses wird dadurch angedeutet, daß mehrere Icons hintereinander dargestellt werden.

Die Skalierung der Zeitachse wird in der Grundeinstellung, 100%, so gewählt, daß die Icons im Aktionsfenster 6 und die Sollwertpunkte klar trennbar voneinander dargestellt werden können. Wird der Darstellungsbereich gedehnt, werden die Icons als kleine Rechtecke dargestellt, und die Darstellung der Sollwerte als Kreuzungspunkte verschwindet

Die Zeitachse enthält die Addition der Zeitspur. Jedoch kann durch Aktionen das Zeitverhalten beeinflußt werden. In diesem Falle beginnt die Zeitzählung jeweils wieder bei Null. Dies trifft für die folgenden Aktionen zu: Triggerbedingung, If-Bedingung, Wiederholung. Um die undefinierte Zeitdauer zu symbolisieren, wird der Sollwertstufe ein schmaler, leicht grauer Bereich angehängt.

Der tabellarische Bereich 2 des Anzeigefensters enthält Spalten 9 für die Zeit und für jede Sollwertspur. Können nicht mehr alle Spalten 9 dargestellt werden, erscheint ein Scroll-Bar 12 für die Sollwertspalten. Die Zeitspalte ist fix am linken Rand. Die Spaltenbreite kann je Spalte einzeln eingestellt werden. Die Zeilenhöhe kann ebenfalls für alle Spalten festgelegt werden.

Die Tabelle enthält eine markierte Zeile 10, diese Zeile enthält die Daten der Sollwertstufe, die durch den Positionsstrich 7 im grafischen Bereich 1 markiert ist. Die Markierung kann verschoben werden, um festzulegen wie viele Stufen vorher und wie viele nachfolgenden Stufen man sehen möchte.

Spalten, die in dem betreffenden Ausschnitt nur "nicht def" enthalten, werden nur dargestellt, wenn die entsprechende Option im Menü Ansicht eingeschaltet worden ist.

Im Spaltenkopf werden Sollwertbezeichnung und Einheit ausgegeben, der Kopf ist mit der Farbe hinterlegt, mit der die Spur im grafischen Bereich gezeichnet wird. Durch Klicken auf den Spaltenkopf wird ein Dialogfenster geöffnet, über das allgemeine Sollwertdaten, wie Skalierung des grafischen Bereiches, Farbe, Schrittweite für die Änderung des Wertes etc. eingestellt werden können. Der tabellarische Bereich verfügt über einen vertikalen und horizontalen Scroll-Bar 11, 12.

Ein Bewegen innerhalb der Fahrprofils ist möglich und die jeweils aktuelle Position wird im grafischen Bereich 1 durch den Positionsstrich 7 und im tabellarischen Bereich 2 durch die hervorgehobenen Werte 10 markiert. Wird die aktuelle Position verändert, findet in beiden Bereichen aufgrund der gekoppelten Steueralgorithmen eine synchrone Veränderung statt. Es gibt mehrere Möglichkeiten die aktuelle Position zu verändern. So kann man den Positionsstrich anfassen (etwa durch einen Mausklick) und verschieben, bewegt man den Positionsstrich in die aktive Zone am linken und rechten Rand wird automatisch das gesamte Fenster verschoben.

Eine andere Möglichkeit ist die Bewegung durch den Scroll-Bar 8 der grafischen Darstellung. Hierbei behält der Positionsstrich 7 seine Position im Fenster. Der Scroll-Bar hat links und rechts jeweils zwei besondere Schaltflächen, zum direkt Sprung auf den Profilanfang bzw. -ende und zum Sprung auf besonders markierte Sollwertstufen.

Bewegung im Profil ist auch möglich dadurch, dass man den vertikalen Scroll-Bar 11 der tabellarischen Darstellung bewegt oder im Menüpunkt "Bearbeiten", Untermenü "Gehe zu", über die Eingabe der Stufennummer auf einer Tastatur auf die gewünschte Sollwertstufe positioniert.

Ein Bereich kann - zum Verändern, Ausschneiden, Kopieren, usw. - durch Klicken auf den Hintergrund der grafischen Darstellung und Ziehen markiert werden. Der ausgewählte Bereich wird dabei farblich hinterlegt.

Über den Menüpunkt Sollwerte können zusätzliche Sollwerte aufgenommen werden. Durch Klicken auf diese Menüoption erscheint eine Liste der möglichen Sollwerte. Klickt man einen Sollwert an, wird für diesen eine Sollwertspalte angelegt. Sollwerte können sowohl im grafischen Bereich wie im tabellarischen Bereich eingegeben werden.

In der nachfolgenden Tabelle findet sich eine genauere Beschreibung, wie die einzelnen Operationen im grafischen Bereich dargestellt werden sollen.

| Operation | Bedienung grafischer Bereich | Bedienung tabellarischer Bereich |
|---|---|---|
| Ändern | Anfassen des Sollwertpunktes. Der Positionsstrich springt sofort dorthin. Der Sollwert kann nun entlang des Positionsstriches bewegt werden. Neben dem Positionsstrich erscheint ein vertikaler Doppelpfeil | Klicken auf die entsprechende Spalte und Eingeben des Wertes. |
| Ändern + Dehnen | Doppelklick auf den Sollwertpunkt. Der Positionsstrich springt auf die Sollwertstufe. Neben den Sollwertpunkt erscheinen ein vertikaler und horizontaler Doppelpfeil. Durch Ziehen des Sollwertes kann der Wert und die Rampenzeit verändert werden. Die anderen Sollwerte werden konstant gehalten. Bis der Sollwert wieder losgelassen werden die neuen Linien gepunktet gezeichnet. | Klicken auf die entsprechende Spalte und Eingeben des Wertes. |
| Einfügen | Klicken auf die Linie. Der Positionsstrich springt auf diese Position. An den Schnittpunkte mit den Sollwertlinien werden kleine Quadrate gezeichnet. Diese können nun angefaßt werden. Während der Operation werden gepunktete Linien zu den benachbarten Sollwerten gezeichnet. Für die anderen Sollwerte werden während der Bewegung solche Werte berechnet, die auf dem ursprünglichem Kurvenverlauf liegen. Die horizontale Bewegung wird begrenzt, so daß man sich nur auf einen minimalen Abstand, Rasterweitezeit, den benachbarten Punkten nähern kann. | Bewegen der Markierung auf die Zeile, vor der eine Einfügung durchgeführt werden soll. Drücken der Taste Shift+Einfügen. Es wird eine neu Stufe berechnet, die genau in der Mitte zwischen beiden Sollwerten liegt. Diese kann nun editiert werden. Synchron ändert sich die grafische Darstellung. |
| Einfügen + Dehnen | Klick mit der rechten Maustaste auf den Sollwert, vor dem eingefügt werden soll. Der Positionsstrich springt auf den Sollwert und die Schnittpunkte werden durch kleine Quadrate markiert. Durch Anfassen und Ziehen eines Quadrates kann der Sollwert und die Zeit eingestellt werden. Für die anderen Sollwerte werden die Verläufe zuerst horizontal verlängert. Diese können anschließend durch .Ändern" neu eingestellt werden. | Bewegen der Markierung auf die Zeile, vor der eine Einfügung durchgeführt werden soll. Drücken der Taste Einfügen. Es wird die markierte Stufe dupliziert. Diese kann nun editiert werden. Synchron ändert sich die grafische Darstellung |
| Löschen | Stellen des Positionsstriches auf die zu löschende Stufe. Drücken von Shift+Entfernen. | Stellen der Markierung auf die zu löschende Stufe, Drücken von Shift+Entfernen |
| Löschen + Verkürzen | Stellen des Positionsstriches auf die zu löschende Stufe. Drücken von Entfernen. | Stellen der Markierung auf die zu löschende Stufe, Drücken von Entfernen |

Die Operationen Addieren und Mischen werden über den Menüpunkt Datei "Addieren+Mischen+Einfügen" aktiviert. Damit wird ein Auswahlfenster geöffnet, mit dem ein Fahrprofil ausgewählt werden kann. Danach erscheint ein Fenster mit dem Titel "Fahrprofilbereich auswählen", daß nur den grafischen Bereich enthält. In diesen werden die Sollwertspuren und Aktionszeilen markiert, Mausklick und Shift-Klick und durch Klicken auf den Grafikhintergrund und Ziehen wird der Zeitbereich markiert. Die so markierten Sollwertspuren und Aktionszeilen können nun angefaßt werden und in den grafischen Bereich des Fensters "Fahrprofile erstellen" bewegt werden. Hier wird nun die zeitliche Positionierung festgelegt. Dazu rastet der Anfang jeweils auf einer Stufe ein. Ist das neue Fahrprofil noch leer, rastet der Bereich automatisch am Anfang ein. Nach dem Ablassen kann mit der rechten Maustaste ein Auswahlfenster aufgerufen werden, daß die Optionen Addieren, Mischen, Einfügen zeigt. Hiermit wird die gewünschte Funktion nun ausgeführt. Die neuen Sollwertspuren werden nun noch gepunktet gezeichnet. Erst mit Klicken auf den Grafikhintergrund werden die neuen Sollwertspuren übernommen. Hinweis: Bei Addieren und Mischen dürfen keine Aktionszeilen ausgewählt sein.

Aktionen können an bestehende Sollwertstufen angehängt werden. Um eine Aktion an eine Sollwertstufe anzuhängen ist auf die entsprechende Aktionszeile zu Klicken. Man erhält ein Fenster mit den Icons, der für diese Zeile zulässigen Aktionen. Klickt man auf das gewünschte Aktionsicon, erscheint dieses hervorgehoben in der Aktionszeile. Es kann nun angefaßt werden und zu der gewünschten Sollwertstufe bewegt werden. Wird eine Aktion bewegt, springt sie dabei von Sollwertstufe zu Sollwertstufe. Nach dem Ablassen des Aktionsicons bei der Sollwertstufe kann durch Klicken mit der rechten Maustaste ein Fenster geöffnet werden, in dem die erforderlichen Parameter eingegeben werden können. Außerdem kann das Stufenereignis, mit dem die Aktion ausgeführt werden soll, gesetzt werden.

Absolute Wegtrigger können nur über ein geöffnetes Streckenprofil gesetzt werden. Zuerst ist im Streckenprofile die gewünschte Stelle zu markieren und dann ist diese Stelle anzufassen und auf die Zeile für Wegtrigger an der gewünschten Sollwertstufe zu setzen.

Werden relative Wegtrigger gesetzt, erscheint zwischen den einzelnen Wegtriggern die Wegangabe.

Werden Aktionen gesetzt, die einen Gültigkeitsbereich haben, wird zuerst die Aktion definiert, Innerhalb des Icons wird ein schwarzes Quadrat gezeichnet. Dies bedeutet, der Geltungsbereich ist noch 0. Man kann nun das Quadrat anfassen und nach rechts ziehen und den Geltungsbereich zu definieren. Dabei wird der Positionsstrich automatisch mit bewegt. Durch Anfassen des Endes der Geltungsmarkierung kann der Bereich verändert werden.

Über den Menüpunkt "Datei" gibt es die üblichen Speicheroperationen, wie Speichern oder Speichern unten, diese gelten für das aktuelle Fahrprofil. Mit der Option "Auswahl speichern unter" können die gerade ausgewählten Sollwertspuren und Aktionszeilen gespeichert werden. Aktionszeilen ohne eine Sollwertspur können nicht separat abgespeichert werden. Da nur mit der Sollwertspur eine Zeitspur verbunden ist.

Häufig wünscht man den gleichen Sollwertverlauf, jedoch mit unterschiedlichen Aktionen, wie z.B. Schalten. Unterschiedliche Varianten von Aktionszeilen können im gleichen Sollwertprofil gespeichert werden. Dazu ist der Bereich der zu speichernden Aktionszeilen auszuwählen und unter Datei "Speichern Aktionen" eine Bezeichnung und Kommentar für diese Aktionen einzugeben. Dabei erscheint eine Liste der bereist abgespeicherten Aktionen. Der Name muß eindeutig sein.

Hierbei ist zu beachten, daß Aktionen, Stufen zugeordnet sind. Werden Stufen eingefügt, bleibt die Zuordnung für gespeicherte Aktionen erhalten. Wird eine Stufe gelöscht, zu der Aktionen gespeichert sind, werden diese ebenfalls gelöscht.

Selbstverständlich können die gespeicherten Ausschnitte auch in einem eigenen Fensterbereich dargestellt werden, vorzugsweise in Form von Icons, welche repräsentativ für die Klasse oder andere Eigenschaften des jeweiligen Ausschnittes sind. Auch können bereits derartige Bausteine vordefiniert und bereits vor Erstellung des ersten benutzerdefinierten Fahrprofils bzw. des ersten, vom Benutzer abgespeicherten Blockes zur Verfügung gestellt sein.

Qualitätskriterien gelten für bestimmte Sollwerte und haben einen Geltungsbereich. Bevor ein Qualitätskriterium gesetzt wird, sind die Sollwerte für die es gelten soll auszuwählen. Unter Option Ansicht kann ausgewählt werden, ob das Qualitätsband gezeichnet wird. Das Qualitätsband wird im grafischen Bereich und durch ein entsprechend breites Farbband gekennzeichnet. Das Farbband ist in gleicher Farbe wie die Sollwertkurve gehalten, jedoch wesentlich heller.

Wird auf ein vorhandenes Qualitätskriterium geklickt, werden die Sollwerte wiederum hervorgehoben.

## Patentansprüche

1. Verfahren zur Parametrierung eines Prüfstandes bzw. Prüffeldes, bei welchem im zeitlichen, weg- und Lastspiel-geführten Prüfverlauf, aufeinanderfolgende Stufen definiert werden, welche Stufen im Prinzip frei wählbare Untermengen aus der Gesamtheit der Sollwert- und Meßkanäle aktivieren, und bei welchen die momentan aktivierten Sollwerte, Parameter und Aktionen von Sensoren und/oder Regelvorrichtungen zur Kontrolle und Überwachung des Prüflaufes angezeigt und nach Bestätigung durch den Benutzer in Steuersignale an den Prüfstand bzw. das Prüffeld umgewandelt werden, wobei unmittelbar aufeinanderfolgende Stufen zu einer Stufensequenz zusammengefaßt und zur gemeinsamen Übertragung auf den Prüfstand bzw. das Prüffeld bereitgestellt werden, wobei auf einer Ebene des Parametrierungsverfahrens Anzeigesteuersignale für die graphische Erstellung und Darstellung jeder Stufensequenz separat und in zumindest zwei unterschiedlichen, aber miteinander gekoppelten Darstellungsformen erzeugt werden,
wobei zusätzlich ein Aktionsfenster bereitgestellt wird, in dem jede von mehreren möglichen Aktionsarten in einer eigenen Zeile dargestellt wird, und wobei folgende Gruppen von Aktionen möglich sind:
(a) Befehle und Einstellungen, die das Leitsystem und das Verhalten von Funktionen beeinflussen,
(b) Aktionen, die den zeitlichen Ablauf des Fahrprofils beeinflussen, und
(c) Vorzweigungen, die die Reihenfolge beeinflussen, in der die Sollwertstufen abgearbeitet wenden.

2. Verfahren nach Anspruch 1, **dadurch gekennzeichnet, daß** jeweils zumindest einer der dargestellten Parameter und/oder Werte jeder unterschiedlichen Darstellungsform jeder Stufensequenz mittels Eingabesignalen von separaten Steuereingängen veränderbar ist, wobei jede Veränderung eines Anzeigesteuersignales ermittelt, entsprechend veränderte Anzeigesteuersignale für alle anderen Darstellungsformen erzeugt und die neuen Werte und zur Übertragung auf den Prüfstand bzw. das Prüffeld bereitgestellt werden.

3. Verfahren nach Anspruch 1 oder 2, **dadurch gekennzeichnet, daß** die Eingabesignale für die Sollwerttypen überprüft und bei Feststellung eines bestimmten Sollwerttyps oder einer bestimmten Kombination von Sollwerttypen eine spezifische, diese Sollwerttypen enthaltende Befehlssequenz aufgerufen, entsprechende Anzeigesteuersignale erzeugt werden und zur Übertragung auf den Prüfstand bzw. das Prüffeld bereitgestellt werden.

4. Verfahren nach einem der Ansprüche 1 bis 3, **dadurch gekennzeichnet, daß** auf einer übergeordneten Ebene des Parametrierungsverfahrens Stufensequenzen in Blöcken zusammengefaßt und jeweils einen Block repräsentierende Eingabesignale abgefragt werden und bei Auswahl eines bestimmten Blockes diesen Block repräsentierende Anzeigesteuersignale für eine weitere, separate Darstellungsform erzeugt sowie die im Block repräsentierten Werte zur Übertragung auf den Prüfstand bzw. das Prüffeld bereitgestellt werden.

5. Prüfstandssteuereinrichtung, umfassend zumindest je eine Speichereinrichtung, eine Recheneinheit, eine Eingabeeinheit für Sollwerte, Parameter od. dgl. und eine optische Anzeigeeinrichtung zur Darstellung der Parameter, Einstellungen und Meßgrößen und Meßwerte, sowie Schnittstellen zu den Sensoren und Regelvorrichtungen des Prüfstandes, welche Bauteile zur gegenseitigen Übermittlung von Daten miteinander verbunden sind,
und wobei die Einrichtung nach einem Steueralgorithmus arbeitet, der ein Verfahren nach einem der Ansprüche 1 ein 4 durchführt.

## Claims

1. Method of parameterizing a test stand or test bay, in which successive steps are defined within a time-administered, travel-administered, and load-cycle-administered test run, which steps activate in principle freely selectable subsets of the totality of target-value and measurement channels, and in which the instantaneously activated target values, parameters, and actions of sensors and/or control devices for controlling and monitoring the test run are displayed, and, after confirmation by the user, are converted into control signals to the test stand or the test bay, wherein steps following in immediate succession are combined into a step sequence and are supplied for shared transfer to the test stand or test bay, wherein display control signals for the graphic creation and display of each step sequence are generated on one level of the parameterization process separately and in at least two different display formats that, however, are linked to each other; wherein additionally an action window is provided in which each of multiple possible action types are displayed in a separate line, and wherein the following groups of actions are possible:
(a) instructions and settings that affect the control system and the behavior of functions;
(b) actions that affect the time sequence of the driving profile; and
(c) branching points that affect the sequence in which the target-value steps are executed.

2. Method according to Claim 1, **characterized in that** at least one of the displayed parameters and/or values of different display formats of each step sequence is changeable by means of input signals from separate control inputs, wherein each change of a display control signal is determined, appropriately changed display control signals for all other display formats are generated, and the new values are supplied for transfer to the test stand or test bay.

3. Method according to Claims 1 or 2, **characterized in that** the input signals are checked in terms of target-value types and a specific instruction sequence containing these target-value types is initiated, corresponding display control signals are generated and provided for transfer to the test stand or test bay, whenever a predetermined target-value type or predetermined combination of target-value types is found.

4. Method according to one of Claims 1 through 3, **characterized in that** step sequences are combined into blocks on a higher level of the parameterization process, and in each case one input signal representing a block is requested, and, when a predetermined block is selected, display control signals representing this block are generated for an additional separate display format, and the values represented in the block are provided for transfer to the test stand or the test bay.

5. Test stand control device, comprising in each case at least one storage device, one arithmetic unit, one input unit for target values, parameters, or the like, and one optical display device for displaying the parameters, settings and measured variables, as well as interfaces to sensors and control equipment of the test stand, which components are interconnected to enable the mutual transfer of data, and wherein the device operates based on a control algorithm that implements a method according to one of Claims 1 through 4.

## Revendications

1. Procédé pour le paramétrage d'un banc d'essai ou d'un champ d'essai, dans lequel, au cours du déroulement temporel de l'essai conduit par cycle de charge, des niveaux consécutifs sont définies, lesdits niveaux activant en principe des sous-ensembles au choix parmi la globalité des canaux de valeurs de consigne et de mesures, et dans lequel les valeurs de consigne, paramètres et actions activés temporairement sont signalés par des capteurs et/ou des dispositifs de réglage, pour le contrôle et la surveillance du déroulement de l'essai, et convertis en signaux de commande destinés au banc d'essai ou au champ d'essai, après confirmation de l'utilisateur, dans lequel les niveaux directement consécutifs sont rassemblés en une séquence de niveaux et mis à disposition pour la transmission commune au banc d'essai ou au champ d'essai, dans lequel des signaux de commande d'affichage sont produits séparément dans une étape du procédé de paramétrage, pour l'établissement et la représentation graphique de chaque séquence de niveaux, sous au moins deux formes de représentation différentes mais couplées entre elles ; dans lequel une fenêtre d'action est en outre mise à disposition, dans laquelle chaque type d'action parmi plusieurs possibles est représenté dans une ligne séparée, et dans lequel les groupes d'actions suivants sont possibles :
(a) ordres et réglages influençant le système de commande et le comportement de fonctions,
(b) actions influençant le déroulement dans le temps du profil de conduite, et
(c) jonctions influençant l'ordre dans lequel sont traités les niveaux de valeurs de consigne.

2. Procédé selon la revendication 1, **caractérisé en ce qu'**à chaque fois, au moins l'un des paramètres et/ou l'une des valeurs représenté (e) s pour chaque forme de représentation de chaque séquence de niveaux peut être modifiés par des entrées de commande séparées, au moyen de signaux d'entrée, dans lequel chaque modification d'un signal de commande d'affichage est indiquée, les signaux de commande d'affichage correspondants modifiés sont produits pour toutes les autres formes de représentation, et les nouvelles valeurs sont mises à disposition pour la transmission au banc d'essai ou au champ d'essai.

3. Procédé selon l'une des revendications 1 ou 2,
**caractérisé en ce que** les signaux d'entrée pour les types de valeurs de consigne sont vérifiés, et lors du constat d'un certain type de valeur de consigne ou d'une certaine combinaison de types de valeurs de consigne, une séquence d'ordre spécifique, contenant ces types de valeurs de consigne, est appelée, des signaux de commande d'affichage correspondants sont produits et mis à disposition pour la transmission au banc d'essai ou au champ d'essai.

4. Procédé selon l'une des revendications 1 à 3,
**caractérisé en ce que** dans une étape supérieure du procédé de paramétrage, des séquences de niveaux sont rassemblées en blocs et les signaux d'entrée représentant respectivement un bloc sont interrogés, et lors de la sélection d'un bloc déterminé, les signaux de commande d'affichage représentant ce bloc sont produits pour une autre forme de représentation séparée, et les valeurs représentées dans le bloc sont mises à disposition pour la transmission au banc d'essai ou au champ d'essai.

5. Dispositif de commande de banc d'essai, comprenant au moins un dispositif de mémoire, un dispositif de calcul, une unité d'entrée pour les valeurs de consigne, les paramètres ou autres, et un dispositif d'affichage optique pour la représentation des paramètres, des réglages et des grandeurs de mesure et des valeurs de mesure, ainsi que des interfaces avec les capteurs et les dispositifs de réglage du banc d'essai, lesquels composants sont reliés pour la transmission réciproque de données, et dans lequel le dispositif travaille selon un algorithme de commande exécutant un procédé selon l'une des revendications 1 à 4.
